# EUROPEAN PATENT SPECIFICATION

(11) **EP 2 679 084 B1**
(45) Date of publication and mention of the grant of the patent: **14.05.2014**
(21) Application number: 12174175.5
(22) Date of filing: 28.06.2012
(51) Int. Cl.: A01D 34/00

(54) **Apparatus for cutting grass**
Vorrichtung zum Schneiden von Gras
Appareil de découpage de gazon

(43) Date of publication of application: 01.01.2014
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 2 082 638
- WO-A1-2011/044803
- WO-A1-2011/145989
- WO-A2-2005/074362
- US-A1- 2009 315 501
- US-B1- 7 185 478

## Description

### FIELD OF APPLICATION

The present invention relates to an apparatus for cutting grass.

### PRIOR ART

As is known, an automatic lawn mower manages the recharging step independently. One critical point of this step is the contact between the lawn mower and the recharging base, which determines the subsequent recharging operation.

As the automatic lawn mower manages the recharging step independently, no human intervention is envisaged to support this operation.

It follows that a good contact is established that constrains the lawn mower, to the appropriate extent, on the recharging base for the recharging operation.

On the other hand, the lawn mower must automatically seek the contact with the recharging base and this contact must also ensure easy release of the lawn mower at the end of the recharging operation, because also this operation is managed automatically by the lawn mower without any human intervention.

It must also be considered that technology is progressively increasing the capacity intensity and currents on recharging batteries.

This makes the need even more urgent to supply a recharge to the robot with a good contact to thus ensure high currents and thus avoid voltage leaks and/or drops.

The lawn mower and charging apparatus described in document WO-A-2011/145989 is also known. This document shows a charging coupling for connecting a robotic garden tool with a charging device. The charging coupling includes a first charging contact and a second charging contact. The first charging contact may be a charging plate or a charging rod. The second charging contact may be provided with a row of resilient contact bars. The arrangement of the first charging contact and the second charging contact is configured such that the resilient contact bars are pressed against the charging plate to provide multiple contact points.

In the light of what has been said, one object of the present invention is to provide an apparatus for improved cutting in terms of recharging efficiency.

Another object of the present invention is to provide an improved apparatus for cutting grass in terms of reliability during the recharging step.

### SUMMARY OF THE INVENTION

These and other objects are achieved by an apparatus for cutting grass, according to what has been disclosed in the attached claims 1 to 11.

The invention, as disclosed, achieves the following technical effects:
- improved reliability of the lawn mower;
- improved efficiency during the recharging step;
- better exploitation of the recharging energy;
- greater recharging speed;
- greater independence of the lawn mower.

The aforesaid technical effects and other technical effects of the invention will be disclosed in greater detail in the description, set out below, of an embodiment provided by way of non-limiting example with reference to the attached drawing.

### SHORT DESCRIPTION OF THE DRAWINGS

- figure 1 shows schematically a perspective view of the apparatus according to the invention;
- figure 1a shows schematically a section view of figure 1;
- figure 2 shows schematically details of components of figures 1 and 1a;
- figure 3 shows a unit comprised in the preceding figures in a first recharging state;
- figure 4 shows the unit of figure 3 in a second recharging state;
- figure 5 shows a general cutting area in which the lawn mower of the invention operates.

### DETAILED DESCRIPTION

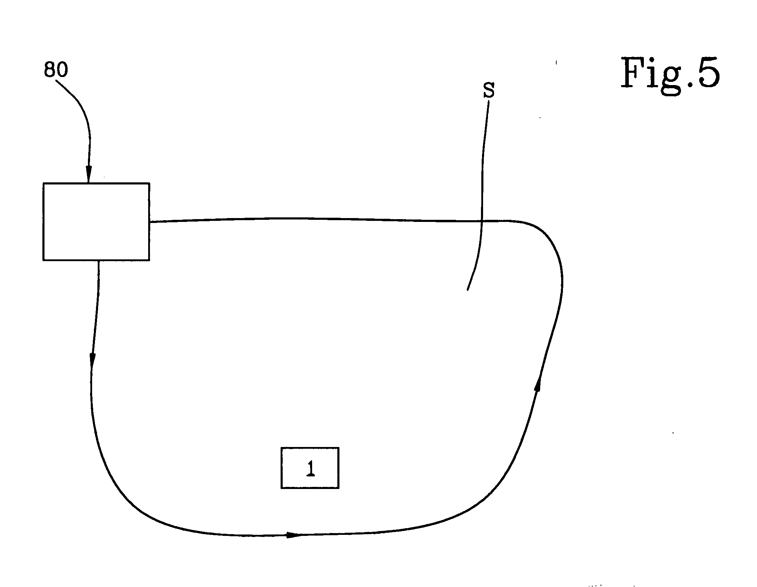

The invention discloses an apparatus for cutting grass comprising a lawn mower 1 provided with movement means 20 for moving the lawn mower 1 at least inside a cutting area S (fig. 5).

The lawn mower 1 further comprises one or more blades 30 for cutting grass in the cutting area S.

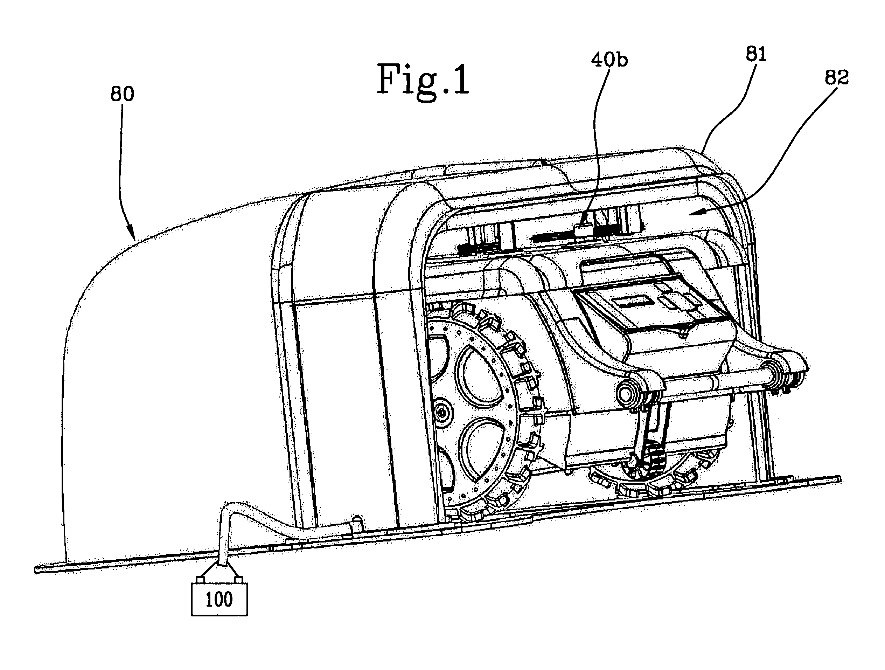

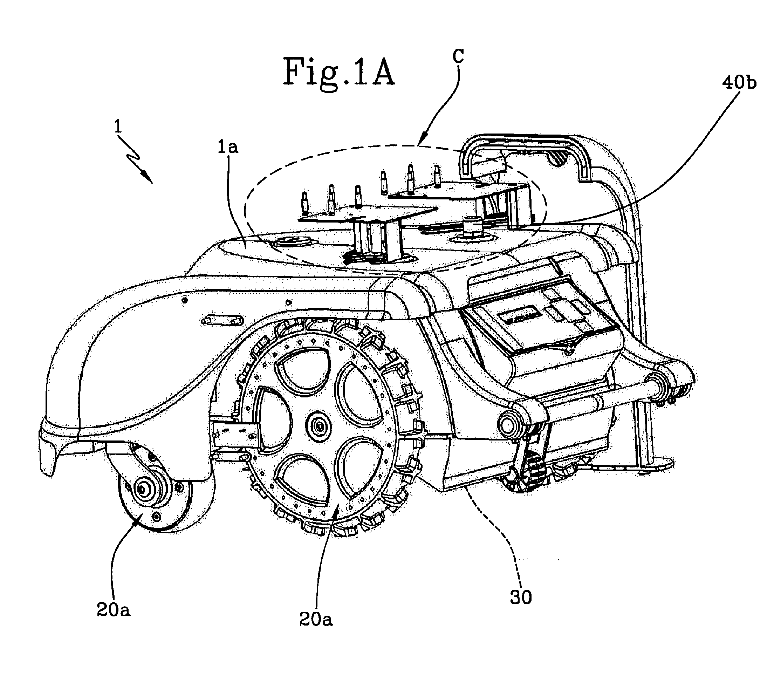

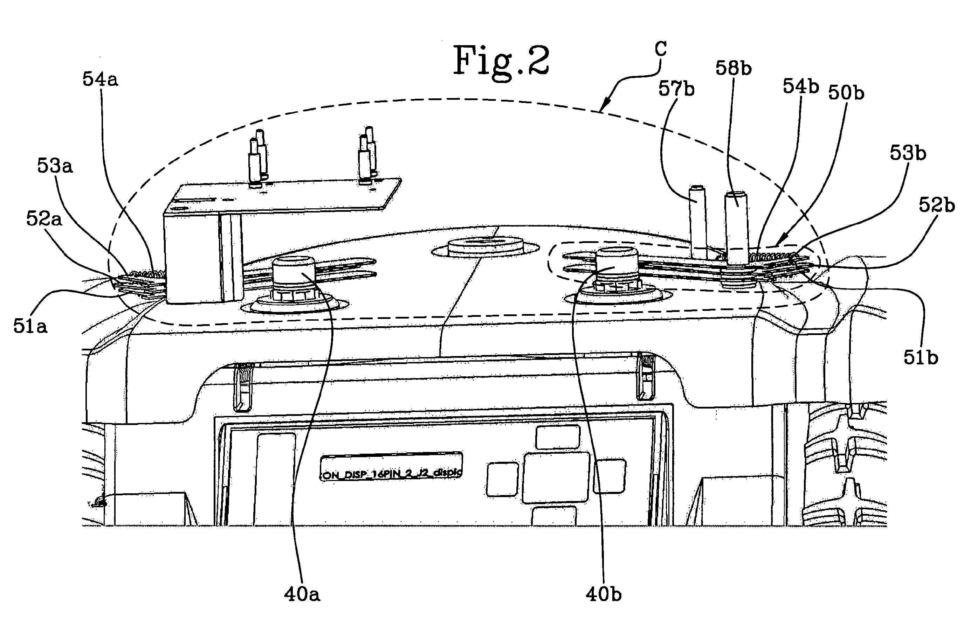

The lawn mower 1 further comprises first recharging means 40a, 40b, (fig. 1, 1a, 2) for recharging the lawn mower 1.

Such first recharging means 40a, 40b is fitted to a portion of the lawn mower 1 and protrudes therefrom.

Preferably, the first recharging means 40a, 40b, is fitted to an upper portion 1a of the lawn mower.

Preferably, the first recharging means 40a, 40b comprises knobs.

The apparatus for cutting grass of the invention comprises a recharging base 80 (fig.1) for the lawn mower 1.

The recharging base 80 comprises second recharging means 50a, 50b (fig. 2, 3, 4) that is removably in contact with the first recharging means 40a, 40b.

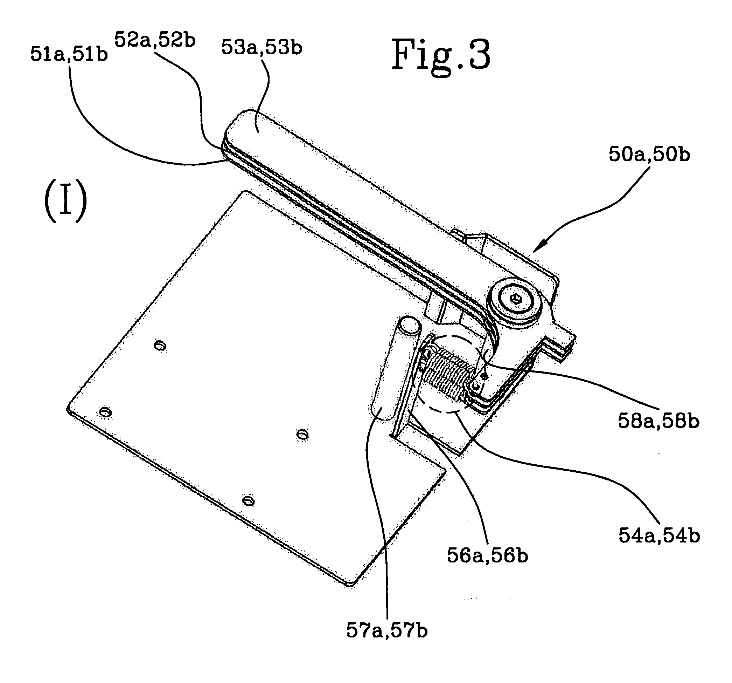

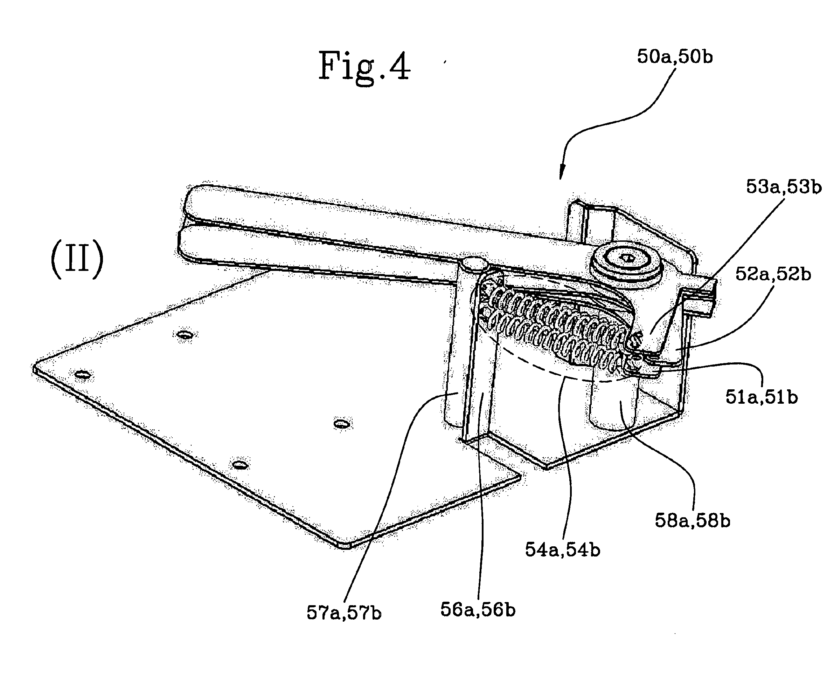

In particular, figures 3 and 4 show, for ease of comprehension, the second recharging means 50a, 50b that is overturned compared with what is shown in figure 2. Advantageously, according to the invention, the second recharging means 50a, 50b is fitted to the recharging base 80 in such a manner as to contact laterally the first recharging means 40a, 40b.

In other words, advantageously according to the invention, the first recharging means 40a, 40b is fitted to the lawn mower 1 in such a manner as to contact laterally the second recharging means 50a, 50b fitted to the recharging base 80.

More in general, the first recharging means 40a, 40b and the second recharging means 50a, 50b are fitted respectively to the lawn mower 1 and to the recharging base 80 in such a manner as to define a lateral reciprocal contact.

The recharging base 80 comprises a summit surface 81 and a recharging chamber 82 (fig.1).

Preferably, the second recharging means 50a, 50b is fitted to the recharging base 80 in such a manner as to protrude from the summit surface 81, extending towards the recharging chamber 82.

Advantageously, according to the invention, the second recharging means 50a, 50b comprises at least one blade 51a, 52a, 53a, 51b, 52b, 53b.

The technical effect achieved by this solution is that more lateral blades are defined between the first and the second recharging means that enables contact impedance to be reduced and thus the recharging current to be increased.

A further derived technical effect is that, owing to the increase in recharging current, it is thus possible to decrease recharging time and to increase the productivity of the lawn mower 1, thus guaranteeing cover of a greater cutting surface.

Further, the start of the next recharging cycle can be anticipated.

According to the invention, the second recharging means 50a, 50b comprises elastic means 54a, 54b (fig. 2, 3, 4) configured for maintaining at least one blade 51a, 52a, 53a, 51b, 52b, 53b in contact with the first recharging means 40a, 40b.

The elastic means 54a, 54b comprises a spring 54a, 54b that is connected, at a first end thereof, to a staff 56a, 56b fixed to the summit surface 81 in such a manner as to constrain the first end of the spring.

Preferably, the elastic means 54a, 54b comprises the spring 54a, 54b connected, at a second end thereof, to at least one blade 51a, 52a, 53a, 51b, 52b, 53b,in such a manner that this at least one blade 51a, 52a, 53a, 51b, 52b, 53b is movably associated with the second end of the spring 54a, 54b.

At least one blade 51a, 52a, 53a, 51b, 52b, 53b is rotatably associated with a pivot 58a, 58b, protruding from the summit surface 81.

The intensity of the rotation of the blade depends on an extension variation on the spring 54a, 54b.

The recharging base further comprises a stroke end pivot 57a, 57b configured for limiting the stroke of the at least one blade 51a, 52a, 53a, 51b, 52b, 53b rotating around the pivot 58a, 58b.

The recharging base 80 further comprises a battery charger 100, such that each at least one blade 51a, 52a, 53a, 51b, 52b, 53b comprises a corresponding connection to the battery charger 100 itself.

From the structure as described, advantageously, according to the invention, the first recharging means 40a, 40b and the second recharging means 50a, 50b define a recharging unit C (fig. 1a, 2) configured for operating between:
- a first state I in which the first recharging means 40a, 40b and the second recharging means 50a,50b are disconnected, not determining any recharge (fig.3);
- a second state II in which the second recharging means 50a,50b contacts laterally the first recharging means 40a, 40b, determining a recharge of the lawn mower 1 (fig.4).

In other words, in the second state II, the first recharging means 40a, 40b contacts laterally the second recharging means 50a,50b.

More in general, in the second state II, the first recharging means 40a, 40b and the second recharging means 50a,50b are mounted respectively on the lawn mower 1 and on the recharging base 80 in such a manner as to define a lateral reciprocal contact.

With regard with what has been said so far, the apparatus of the invention has the following operation: the lawn mower 1 is configured for entering the recharging chamber 82 of the recharging base 80.

Further, the lawn mower is configured for pushing with the first recharging means 40a, 40b the second recharging means 50a, 50b in such a manner that the second recharging means 50a, 50b contacts laterally the first recharging means 40a, 40b, determining an operating change of the recharging unit C from the first recharging absence state I to the second lawn mower recharging state II.

In other words, the lawn mower 1 is configured for pushing with the first recharging means 40a, 40b the second recharging means 50a, 50b in such a manner that the first recharging means 40a, 40b contacts laterally the second recharging means 50a, 50b, determining an operating change of the recharging unit C from the first recharging absence state I to the second lawn mower 1 recharging state II.

More in general, the lawn mower is configured for pushing with the first recharging means 40a, 40b the second recharging means 50a, 50b in such a manner that the first recharging means 40a, 40b and the second recharging means 50a, 50b define a lateral reciprocal contact determining an operating change of the recharging unit C from the first recharging absence state I to the second lawn mower 1 recharging state II.

The thrust with the first recharging means 40a, 40b on the second recharging means 50a, 50b occurs in such a manner that the second recharging means 50a, 50b contacts laterally the first recharging means 40a, 40b or, in other words, the first recharging means 40a, 40b contacts laterally the second recharging means 50a, 50b.

More in general, the thrust with the first recharging means 40a, 40b on the second recharging means 50a, 50b occurs in such a manner that the first recharging means 40a, 40b and the second recharging means 50a, 50b define a lateral reciprocal contact.

This thrust determines a pressure of the elastic means 54a, 54b on the at least one blade 51a, 52a, 53a, 51b, 52b, 53b in such a manner as to maintain the blade 51a, 52a, 53a, 51b, 52b, 53b in contact with the first recharging means.

The invention, as disclosed, achieves the following technical effects:
- improved reliability of the lawn mower;
- improved efficiency during the recharging step;
- better exploitation of the recharging energy;
- greater recharging speed;
- greater range of the lawn mower.

## Claims

1. Apparatus for cutting grass comprising:
• a lawn mower (1) provided with:
○ movement means (20) for moving said lawn mower (1) at least inside one cutting area (S);
○ one or more blades (30) for cutting grass in said cutting area (S);
○ first recharging means (40a, 40b), for recharging said lawn mower (1), fitted to a portion (1a) of said lawn mower (1) and protruding therefrom;
• a recharging base (80), for said lawn mower (1), comprising second recharging means (50a,50b) removably in contact with said first recharging means (40a, 40b),
said second recharging means (50a,50b) being fitted to said recharging base (80) in such a manner as to define a lateral reciprocal contact with said first recharging means (40a, 40b);
said first (40a, 40b) and second (50a,50b) recharging means defining a recharging unit (C) configured for operating between:
o a first state (I) wherein said first (40a, 40b) and second (50a,50b) recharging means is disconnected, not determining any recharge;
o a second state (II) wherein said first recharging means (40a, 40b) and said second recharging means (50a, 50b) define a lateral reciprocal contact determining a recharge of said lawn mower (1);
said second recharging means (50a, 50b) comprising at least one blade (51a, 52a, 53a, 51b, 52b, 53b); and elastic means (54a, 54b) configured for maintaining said at least one blade (51a, 52a, 53a, 51b, 52b, 53b) in contact with said first recharging means (40a,
40b); **characterized in that** said elastic means (54a, 54b) comprises a spring (54a, 54b) connected, at a first end thereof, to a bracket (56a, 56b) fixed to a summit surface (81) of said recharging base (80) in such a manner as to constrain said end of said spring.

2. Apparatus according to claim 1 wherein said second recharging means (50a, 50b) is fitted to said recharging base (80) in such a manner as to contact laterally said first recharging means (40a, 40b), and in said second state (II) said second recharging means (50a, 50b) contacts laterally said first recharging means (40a, 40b), determining a
recharge of said lawn mower (1).

3. Apparatus according to any one of claims 1 or 2 wherein said first recharging means (40a, 40b) is fitted to an upper portion (1a) of said lawn mower (1) and protruding therefrom.

4. Apparatus according to any preceding claim wherein said recharging base (80) comprises a summit surface (81) and a recharging chamber (82) and said second recharging means (50a, 50b) is fitted to said recharging base (80) in such a manner as to protrude from said summit surface (81) extending towards said recharging chamber (82).

5. Apparatus according to any preceding claim wherein said elastic means (54a, 54b) comprises a spring (54a, 54b) connected, at a second end thereof to said at least one blade (51a, 52a, 53a, 51b, 52b, 53b), said at least one blade (51a, 52a, 53a, 51b, 52b, 53b) being movably associated with said spring (54a, 54b).

6. Apparatus according to any preceding claim, wherein said at least one blade (51a, 52a, 53a, 51b, 52b, 53b) is rotatably associated with a pivot (58a, 58b), protruding from said summit surface (81), as a function of an extension variation of said spring (54a, 54b).

7. Apparatus according to any preceding claim comprising a stroke end pivot (57a, 57b) configured for limiting the stroke of said at least one blade (51a, 52a, 53a, 51b, 52b, 53b) rotating around said pivot (58a, 58b).

8. Apparatus according to any one of claims 4 to 7 wherein said lawn mower (1) is configured for:
• entering said recharging chamber (82) of said recharging base (80);
• pushing with said first recharging means (40a, 40b) in such a manner that the first recharging means (40a, 40b) and the second recharging means (50a, 50b) define a lateral reciprocal contact, determining an operating change of said recharging unit (C) from said first recharging absence state (I) to said second lawn mower (1) recharging state (II).

9. Apparatus according to claim 8 wherein said first recharging means (40a, 40b) is configured for pushing on said second recharging means (50a, 50b) in such a manner that the first recharging means (40a, 40b) and the second recharging means (50a, 50b) define a lateral reciprocal contact determining a pressure of said elastic means (54a,
54b) on said at least one blade (51a, 52a, 53a, 51b, 52b, 53b) in such a manner as to maintain the blade (51a, 52a, 53a, 51b, 52b, 53b) in contact with said first recharging means.

10. Apparatus according to any preceding claim wherein said recharging base (80) comprises a battery charger (100), and wherein each said at least one blade (51a, 52a, 53a, 51b, 52b, 53b) comprises a corresponding connection to said battery charger (100).

11. Apparatus according to any one of the preceding claims wherein said first recharging means (40a, 40b) comprises knobs.

## Patentansprüche

1. Vorrichtung zum Schneiden von Gras, umfassend:
- einen Rasenmäher (1), versehen mit:
• Bewegungsmitteln (20) zum Bewegen des Rasenmähers (1) mindestens in einem Schneidbereich (S);
• einem oder mehreren Messern (30) um Schneiden von Gras in diesem Schneidbereich (S);
• erste Auflademittel (40a, 40b) zum Aufladen des Rasenmähers (1), befestigt an einem Abschnitt (1a) des Rasenmähers (1) und daraus hervorstehend;
- eine Aufladestation (80) für diesen Rasenmäher (1), umfassend zweite Auflademittel (50a, 50b), entfernbar in Kontakt mit den ersten Auflademitteln (40a, 40b),
wobei diese zweiten Auflademittel (50a, 50b) an der
Aufladestation (80) so befestigt sind, dass sie einen gegenseitigen seitlichen Kontakt mit den ersten Auflademitteln (40a, 40b) definieren;
wobei die ersten (40a, 40b) und die zweiten (50a, 50b)
Auflademittel eine Aufladeeinheit (C) definieren, ausgelegt für den Betrieb zwischen:
• einem ersten Stadium (I), wobei die ersten (40a, 40b) und die zweiten (50a, 50b) Auflademittel nicht angeschlossen sind und kein Aufladen bewirken;
• einem zweiten Stadium (II), wobei die ersten Auflademittel (40a, 40b) und die zweiten Auflademittel (50a, 50b) einen gegenseitigen seitlichen Kontakt definieren und ein Aufladen des Rasenmähers (1) bewirken;
wobei die zweiten Auflademittel (50a, 50b) mindestens
ein Messer (51a, 52a, 53a, 51b, 52b, 53b) und elastische Mittel (54a, 54b) umfassen, die ausgelegt sind, um das mindestens eine Messer (51a, 52a, 53a, 51b, 52b, 53b) in Kontakt mit den ersten Auflademitteln (40a, 40b) zu halten, **dadurch gekennzeichnet, dass** die elastischen Mittel (54a, 54b) eine Feder (54a, 54b) umfassen, die an einem ersten Ende mit einem Bügel (56a, 56b) verbunden ist, fixiert an eine oberseitige Oberfläche (81) der Aufladestation (80), sodass das Ende der Feder festgespannt wird.

2. Vorrichtung nach Anspruch 1, wobei die zweiten Auflademittel (50a, 50b) an der Aufladestation (80) so befestigt sind, dass der seitliche Kontakt zu den ersten Auflademittel (40a, 40b) hergestellt wird, und die zweiten Auflademittel (50a, 50b) im zweiten Stadium (II) seitlich die ersten Auflademittel (40a, 40b) berühren und ein Aufladen des Rasenmähers (1) bewirken.

3. Vorrichtung nach Anspruch 1 oder 2, wobei die ersten Auflademittel (40a, 40b) an einem oberen Abschnitt (1a) des Rasenmähers (1) befestigt sind und daraus hervorstehen.

4. Vorrichtung nach einem der vorhergehenden Ansprüche, wobei die Aufladebasis (80) eine oberseitige Oberfläche (81) und eine Aufladekammer (82) umfasst und die zweiten Auflademittel (50a, 50b) an der Aufladestation (80) befestigt sind, sodass sie aus der oberseitigen Oberfläche (81) hervorstehen und sich zur Aufladekammer (82) erstrecken.

5. Vorrichtung nach einem der vorhergehenden Ansprüche, wobei die elastischen Mittel (54a, 54b) eine Feder (54a, 54b) umfassen, die an einem zweiten Ende an mindestens ein Messer (51a, 52a, 53a, 51b, 52b, 53b) angeschlossen ist, wobei mindestens ein Messer (51a, 52a, 53a, 51b, 52b, 53b) bewegbar mit der Feder (54a, 54b) verbunden ist.

6. Vorrichtung nach einem der vorhergehenden Ansprüche, wobei das mindestens eine Messer (51a, 52a, 53a, 51b, 52b, 53b) drehbar mit einem Zapfen (58a, 58b), der aus der oberseitigen Oberfläche (81) als Funktion einer Verlängerungsveränderung der Feder (54a, 54b) hervortritt, verbunden ist.

7. Vorrichtung nach einem der vorhergehenden Ansprüche, umfassend einen Anschlagszapfen (57a, 57b), der ausgelegt ist, um den Hub des mindestens einen Messers (51a, 52a, S3a, 51b, 52b, 53b), das sich um diesen Zapfen (58a, 58b) dreht, zu begrenzen.

8. Vorrichtung nach einem der Ansprüche 4 bis 7, wobei der Rasenmäher (1) ausgelegt ist, um:
• in diese Aufladekammer (82) der Aufladestation (80) einzufahren:
• so mit den ersten Auflademitteln (40a, 40b) zu drücken, dass die ersten Auflademittel (40a, 40b) und die zweiten Auflademittel (50a, 50b) einen seitlichen gegenseitigen Kontakt definieren und eine Betriebsumschaltung der Aufladeeinheit (C) vom ersten Stadium, in dem kein Aufladen erfolgt (I), zum zweiten Aufladestadium (II) des Rasenmähers (1) erfolgt.

9. Vorrichtung nach Anspruch 8, wobei die ersten Auflademittel (40a, 40b) ausgelegt sind, um auf die zweiten Auflademittel (50a, 50b) zu drücken, sodass die ersten Auflademittel (40a, 40b) und die zweiten Auflademittel (50a, 50b) einen gegenseitigen seitlichen Kontakt definieren und einen Druck der elastischen Mittel (54a, 54b) auf das mindestens eine Messer (51a, 52a, 53a, 51b, 52b, 53b) bewirken, sodass das Messer (51a, 52a, 53a, 51b, 52b, 53b) in Kontakt mit den ersten Auflademitteln beibehalten wird.

10. Vorrichtung nach einem der vorhergehenden Ansprüche, wobei die Aufladestation (80) ein Batterieladegerät (100) umfasst und wobei jedes mindestens eine Messer (51a, 52a, 53a, 51b, 52b, 53b) einen entsprechenden Anschluss an dieses Batterieladegerät (100) umfasst.

11. Vorrichtung nach einem der vorangehenden Ansprüche, wobei die ersten Auflademittel (40a, 40b) Knöpfe umfassen.

## Revendications

1. Appareil de découpage de gazon, comprenant:
- une tondeuse à gazon (1) pourvue:
• de moyens de déplacement (20) pour déplacer ladite tondeuse à gazon (1) au moins à l'intérieur d'une zone de coupe (S);
• d'une ou plusieurs lames (30) servant à couper le gazon dans ladite zone de coupe (S);
• d'un premier moyen de recharge (40a, 40b), servant à recharger ladite tondeuse à gazon (1), monté sur une partie (1a) de ladite tondeuse à gazon (1) et qui en dépasse;
- d'une base de recharge (80), destinée à ladite tondeuse à gazon (1), comprenant un second moyen de recharge (50a, 50b) en contact de façon amovible avec ledit premier moyen de recharge (40a, 40b), ledit second moyen de recharge (50a, 50b) étant monté sur ladite base de recharge (80) de manière à définir un contact latéral réciproque avec ledit premier moyen de recharge (40a, 40b);
ledit premier (40a, 40b) et second (50a, 50b) moyen de
recharge définissant une unité de recharge (C) configurée pour fonctionner entre:
• un premier état (I) dans lequel lesdits premier (40a, 40b) et second (50a, 50b) moyens de recharge sont débranchés, ne déterminant aucune recharge;
• un second état (II) dans lequel ledit premier moyen de recharge (40a, 40b) et ledit second moyen de recharge (50a, 50b) définissent un contact latéral réciproque déterminant une recharge de ladite tondeuse à gazon (1);
ledit second moyen de recharge (50a, 50b) comprenant au
moins une lame (51a, 52a, 53a, 51b, 52b, 53b) et un moyen élastique (54a, 54b) configurés pour maintenir ladite au moins une lame (51a, 52a, 53a, 51b, 52b, 53b) en contact avec ledit premier moyen de recharge (40a, 40b) ; **caractérisé en ce que** ledit moyen élastique (54a, 54b) comprend un ressort (54a, 54b) relié, à sa première extrémité, à un support (56a, 56b) fixé à une surface sommitale (81) de ladite base de recharge (80) de manière à retenir ladite extrémité dudit ressort.

2. Appareil selon la revendication 1, dans lequel ledit second moyen de recharge (50a, 50b) est monté sur ladite base de recharge (80) de manière à se mettre en contact latéralement avec ledit premier moyen de recharge (40a, 40b) et dans ledit second état (II), ledit second moyen de recharge (50a, 50b) se met en contact latéralement avec ledit premier moyen de recharge (40a, 40b), déterminant une recharge de ladite tondeuse à gazon (1).

3. Appareil selon l'une quelconque des revendications 1 ou 2, dans lequel ledit premier moyen de recharge (40a, 40b) est monté sur une partie supérieure (1a) de ladite tondeuse à gazon (1) et en dépasse.

4. Appareil selon l'une quelconque des revendications précédentes, dans lequel ladite base de recharge (80) comprend une surface sommitale (81) et une chambre de recharge (82) et ledit second moyen de recharge (50a, 50b) est monté sur ladite base de recharge (80) de manière à dépasser de ladite surface sommitale (81) se développant vers ladite chambre de recharge (82).

5. Appareil selon l'une quelconque des revendications précédentes, dans lequel ledit moyen élastique (54a, 54b) comprend un ressort (54a, 54b) relié, à sa seconde extrémité, à ladite au moins une lame (51a, 52a, 53a, 51b, 52b, 53b), ladite au moins une lame (51a, 52a, 53a, 51b, 52b, 53b) étant associée de façon mobile au dit ressort (54a, 54b).

6. Appareil selon l'une quelconque des revendications précédentes, dans lequel ladite au moins une lame (51a, 52a, 53a, 51b, 52b, 53b) est associée de façon rotative à un pivot (58a, 58b), dépassant de ladite surface sommitale (81), en fonction d'une variation d'extension dudit ressort (54a, 54b).

7. Appareil selon l'une quelconque des revendications précédentes, comprenant un pivot à fin de course (57a, 57b) configuré pour limiter la course de ladite au moins une lame (51a, 52a, 53a, 51b, 52b, 53b) tournant autour dudit pivot (58a, 58b).

8. Appareil selon l'une quelconque des revendications de 4 à 7, dans lequel ladite tondeuse à gazon (1) est configurée pour:
• entrer dans ladite chambre de recharge (82) de ladite base de recharge (80);
• pousser avec ledit premier moyen de recharge (40a, 40b) de manière à ce que le premier moyen de recharge (40a, 40b) et le second moyen de recharge (50a, 50b) définissent un contact latéral réciproque, déterminant un changement de fonctionnement de ladite unité de recharge (C), dudit premier état d'absence de recharge (I) au dit second état de recharge (II) de la tondeuse à gazon (1).

9. Appareil selon la revendication 8, dans lequel ledit premier moyen de recharge (40a, 40b) est configuré pour pousser sur ledit second moyen de recharge (50a, 50b) de manière à ce que le premier moyen de recharge (40a, 40b) et le second moyen de recharge (50a, 50b) définissent un contact latéral réciproque déterminant une pression dudit moyen élastique (54a, 54b) sur ladite au moins une lame (51a, 52a, 53a, 51b, 52b, 53b) de manière à maintenir la lame (51a, 52a, 53a, 51b, 52b, 53b) en contact avec ledit premier moyen de recharge.

10. Appareil selon l'une quelconque des revendications précédentes, dans lequel ladite base de recharge (80) comprend un chargeur de batterie (100), et dans lequel chacune desdites au moins une lame (51a, 52a, 53a, 51b, 52b, 53b) comprend un raccordement correspondant au dit chargeur de batterie (100).

11. Appareil selon l'une quelconque des revendications précédentes, dans lequel ledit premier moyen de recharge (40a, 40b) comprend des pommeaux.
